# EUROPEAN PATENT APPLICATION

(11) **EP 4 686 850 A1**
(43) Date of publication of application: **04.02.2026**
(21) Application number: 25190723.4
(22) Date of filing: 21.07.2025
(51) Int. Cl.: F16C 35/02, F16B 19/02, F16C 35/04

(54) **CASING FOR FOOD APPLICATIONS**

(30) Priority: 30.07.2024 IT 202400017665
(71) Applicant: Aktiebolaget SKF, 415 50 Göteborg (SE)
(72) Inventor: Bertolini, Andrea A, 54033 Carrara (IT); Baracca, Fausto, 54100 Massa (IT); Frezza, Pasquale, 81031 Aversa (CE) (IT); Scaltriti, Gianpiero, 10135 Torino (IT)
(74) Representative: Kohl, Thomas

(57) **Abstract**

*Casing (10) of a support assembly for food applications, made of composite material and having a body (15), in turn provided with:*
*- a housing portion (20) having a through-seat (25) inside which a bearing unit is seated,*
*- a flange portion (30) for fixing the casing to a machine, having a base surface (35) and at least two through-holes (32) for housing elements for fixing the casing (10) to the machine,*
*- at least two metal bushings (40) which are stably housed inside respective through-holes (32) and are coaxial therewith,*
*the casing (1) also having:*
*- at least two spacers (15), equal in number to the number of through-holes (32), applied on the base surface (35) of the flange portion (30) opposite the respective though-holes (32), wherein each of the spacers (5) in turn comprises a bushing (51) made of metallic material and a collar (52) made of elastomeric material, bushing (51) and collar (52) being coaxial with each other and stably connected together,*
*- at least two inserts (60), equal in number to the number of spacers (5) and housed with interference inside the respective bushings (4) and inside the respective spacers (50).*

## Description

### Technical Sector of the Invention

The present invention relates to a casing for food applications and more particularly for the bakery industry.

### Prior Art

In the food industry, also referred to below as F&B (Food and beverages) industry, efforts are being increasingly directed towards developing new machines and machine designs aimed at improving the safety and quality of foods.

A typical component for these applications is a support assembly for rotating shafts. The support assembly comprises a casing made of polymeric material, which is compatible with food applications. The casing is provided with a spherical seat which houses internally a bearing unit which in turn allows the rotation of a rotating machine shaft with respect to the casing. On the other hand, the casing is a stationary component and is locked to the frame of a machine. The casing comprises a flange or base portion which has a surface making contact with the frame of the machine and has numerous cavities which extend from the contact surface towards the inside of the flange portion. These cavities have, overmoulded inside them, a shaped gasket which is made of elastomeric material, also compatible with food applications, and ensures a seal between casing and frame of the machine so as to prevent the possible infiltration of water and bacteria which may be hidden behind the base of the supports. A hidden colony of bacteria which cannot be washed is obviously a major drawback for the F&B industry.

In some F&B applications, in particular in the bakery and baked products industry, sealing of the casing base is not necessary and the user of the machine prefers to have "stand-out" casings.

These solutions have a specific form which arranges most of the base of the casing at a distance from the frame of the machine so that washing of the component is performed using only a high-pressure air jet. In fact, in these applications for baked products, the standard washing procedure is not performed because the units are not subject to soiling and the user may wash the production line only with an air jet. For this reason, the shaped gasket applied to the base of the casing in other F&B applications is not required in the applications for baked products.

A known type of casing for the aforementioned applications involves the manufacture of specially designed casings which do not have a shaped gasket, but are provided with integrated supports which allow most of the base surface of the casing to remain detached from the machine frame. These solutions involve the construction of more complex moulds and a consequent increase in the production costs.

### Summary of the Invention

In order to solve substantially the aforementioned technical problems, the present invention defines a casing for food applications, in particular for bakery and baked products, provided with a body and a plurality of spacers for raising the base surface of the body of the casing.

Therefore, according to the present invention a casing of a support assembly for food applications having the features illustrated in the independent claim is provided.

Further preferred and/or particularly advantageous embodiments of the invention are described in accordance with the characteristic features indicated in the attached dependent claims.

### Brief Description of the Drawings

The invention will now be described with reference to the attached drawings which illustrate a non-limiting example of embodiment thereof, in which:
- Figure 1 is a view from above of a casing for food applications, according to a preferred embodiment of the present invention,
- Figure 2 is a cross-section through the casing according to Figure 1, and
- Figure 3 shows, on a larger scale, a detail of the casing according to Figure 1.

### Detailed Description

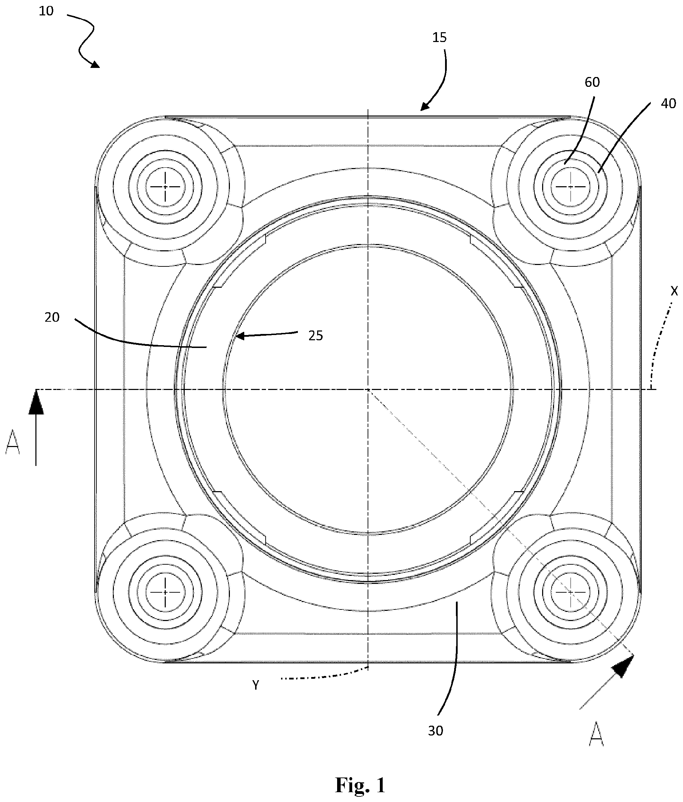

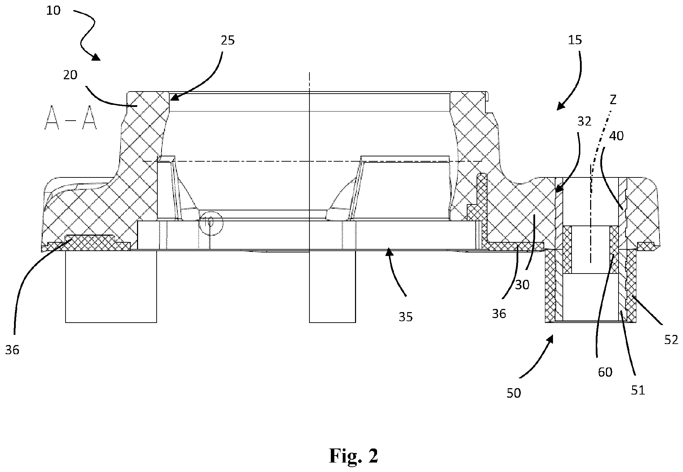

With reference to Figures 1 and 2, a casing 10 of a support assembly for food applications is made of polymeric material and comprises a body 15 in turn provided with:
- an annular housing portion 20 having a through-seat 25 inside which a bearing unit is seated in a stable and known manner, and
- a flange portion 30 for fixing the casing 10 to the machine, having, in the non-limiting example shown in Figure 1, a square plan-view shape with a longitudinal axis X of symmetry and a transverse axis Y of symmetry. The flange portion 30 also has a base surface 35 and at least two through-holes 32, four in the example of embodiment shown in Figures 1 and 2, for housing in a manner known (and therefore not shown) locking elements, for example bolts, for locking the casing 10 to a machine frame. Depending on the type of casing, the number of through-holes 32 may therefore be two, three or four or even a greater number should more complex forms be necessary. A gasket 36 made of elastomeric material is overmoulded onto the flange portion 30, in particular along its base surface, said gasket having a base surface 36a projecting slightly from the base surface 35 of the flange portion.

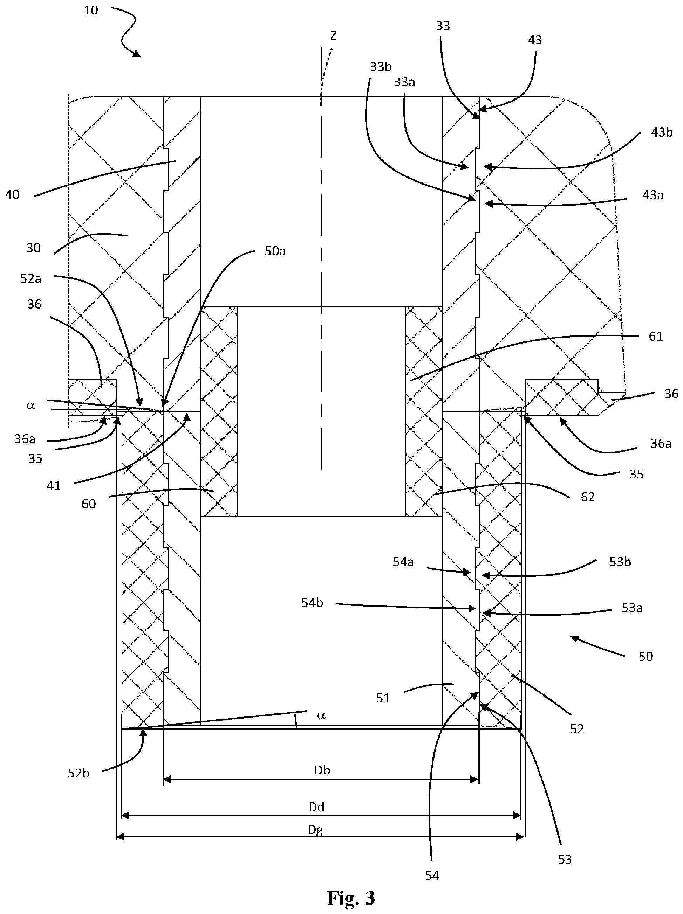

With reference also to Figure 3, the body 15 comprises at least two cylindrical metal bushings 40 which are stably housed inside respective though-holes 32. The bushing 40 is coaxial with the respective through-hole 32 with which it has a same axis of symmetry Z and is designed to support the stress state transmitted by the locking elements. In this way the polymeric material of the flange portion 30 does not have to withstand the compressive load transmitted by the bolts. Stable fixing of the bushings 40 inside the through-holes 32 is ensured by suitably combining a first cylindrical surface 33 which defines the through-hole 32 with a second, external, cylindrical surface 43 of the bushings 40. More particularly, each of the two cylindrical surfaces 33, 43 has a plurality of alternating and adjacent protrusions 33a, 43a and recesses 33b, 43b arranged so that a recess 43b of the surface 43 of the bushing 40 corresponds to a protrusion 33a of the surface 33 of the through-hole 32 and, vice versa, a protrusion 43a of the surface 43 of the bushing 40 corresponds to a recess 33b of the surface 33 of the through-hole 32.

According to the present invention, the casing 10 is provided with at least two spacers 50 which have overall the form of a cylindrical bushing. Each spacer 50 comprises two coaxial components which are stably connected together:
- a cylindrical bushing 51 with a geometry and dimensions the same as those of the bushing 40 of the body 15. The bushing 51 is made of stainless steel with a high corrosion resistance, for example a stainless steel of the AISI 300 series, and this stainless steel may be the same material used for the bushings 40. In this way, the bushing 51 of the spacer 50 and the bushing 40 of the body 15 may be regarded as being the same component. In this way the same components are reused with an obvious saving in production costs and simplification of management of the components;
- a collar 52 made of elastomeric material, external and coaxial with respect to the bushing 51, also having the form of a substantially cylindrical bushing. The collar 52 is made of a material suitable for F&B applications, for example polyurethane, and in any case a material certified by the health authorities.

Stable fixing of the bushing 51 together with the collar 52 is ensured by suitably combining a first cylindrical and external surface 53 of the bushing 51 with a second cylindrical and internal surface 54 of the collar 52. More particularly, each of the two cylindrical surfaces 53, 54 has a plurality of alternating and adjacent protrusions 53a, 54a and recesses 53b, 54b arranged so that a recess 54b of the surface 54 of the collar 52 corresponds to a protrusion 53a of the surface 53 of the bushing 51 and, vice versa, a protrusion 54a of the surface 54 of the collar 52 corresponds to a recess 53b of the surface 53 of the bushing 51.

The spacers 50 have the function of raising the base surface 35 of the flange portion 30 with respect to the surface of the machine so as to convert a casing according to the prior art provided with a shaped gasket on its base surface into a stand-out casing suitable for applications in the bakery and baked products industry. The spacers 50 are arranged, therefore, between the frame of the machine and the body 15, or rather the flange portion 30, of the casing 10. More precisely, an annular surface 50a of the spacer 50 is in contact with the base surface 35 of the flange portion 30 and with an annular surface 41 of the bushing 40, where the base surface 35 and the annular surface 41 are coplanar.

The spacers 50 are equal in number to the number of through-holes 32 and have the same internal diameter as the bushings 40. The spacers 50 are positioned so that their axis of symmetry coincides with the same axis Z of the through-holes 32 and of the metal bushings 40. In other words, the spacers 50 must be coaxial with the through-holes 32 and with the bushings 40.

In order to stably join the body 15 of the casing 10 together with the spacers 50 during the process for assembly of the casing 10 on the machine and with the important aim of facilitating the same assembly process, the casing 10 further comprises at least two inserts 60 which have the form of a cylindrical bushing. The inserts 60 are housed with interference inside the bushings 40 and substantially with the same interference inside the spacers 50, in particular inside the bushing 51. Therefore the inserts have:
- a first portion 61, proximal with respect to the through-seat 25 of the body 15 of the casing 10, mounted with interference inside the bushings 40, and
- a second portion 62, distal with respect to the through-seat 25, mounted with interference inside the spacers 50, in particular inside the bushing 51.

Advantageously, the inserts 60 must be blue-coloured, namely have the same colour as the body 15 of the casing 10 and be made of a material which can be detected by a metal detector. These characteristics result in the inserts 60 being identifiable by the end user who may carry out the following assembly procedure:
- positioning the casing 10 on the machine frame,
- inserting the locking elements, for example the bolts,
- pushing with each bolt against a respective insert 60 with the aim of removing it.
The inserts 60 slide inside the through-holes of the machine frame and emerge therefrom on the side opposite the bolt-insertion side;
- tightening the bolts so as to lock the casing to the machine frame, for example by means of a locking nut.

Therefore, the function of the insert 60, before assembly of the casing on the machine and during the first two stages of said assembly, is to keep the casing 10, understood as being the structure composed of body 15 plus spacers 50, joined together and to keep the spacers 50 coaxial with the bushings 40 and the through-holes 32. This function, during the last stages of assembly, is performed by the bolts which replace the inserts and push them out of the casing and the through-holes of the machine frame. In this way the integrity of the casing is always ensured. Without the presence of the inserts 60, the integrity of the casing 10 would not be ensured, but instead the body 15 and a certain number of spacers 50 would be available as separate components which would be difficult to manage since it must be ensured that the spacers 50 remain coaxial with the respective through-holes 32 of the body 15.

The fact that the inserts 60 are blue-coloured and can be detected by a metal detector allows them to be easily identified when they emerge from the side opposite the bolt-insertion side.

As already mentioned, the inserts 60 ensure that the spacers 50 are perfectly coaxial with the bushings 40. This feature is very important because it is good design practice for the spacers 50 to be in contact with the frame of the machine and for all the loads acting on the bolts to be transferred from the bolts to the frame of the machine via the metal bushings 40 and the spacers 50, which are also made of metallic material, and not via the material of the casing body: in fact, the composite material might not be able to withstand the compression stresses without breaking.

In addition to the coaxial arrangement between the spacers 50 and the bushings 40/through-holes 32, in order to comply with the aforementioned design practice it is very important for the spacers 50 to be perfectly and entirely in contact with the machine frame. This is ensured by designing the spacer 50 so that its external diameter Dd is greater than the external diameter Db of the bushings 40. In this way the spacer 50 will be in contact with the surface 35 of the flange portion 30 which is machined so as to ensure good flatness.

Another important characteristic for ensuring perfect contact of the spacer 50 with the machine frame is that the external diameter Dd of the spacer 50 should be smaller than the internal diameter Dg of the elastomeric gasket 36. In fact, as already mentioned, the base surface 36a of the gasket could protrude slightly from the base surface 35 of the flange portion 30 and this would create an imperfect contact between the spacer 50 and the body 15 of the casing 10 and, consequently, the machine frame. Moreover, this contact would occur between the gasket 36 and the collar 52 of the spacer 50, which are both made of elastomeric material, and consequently it would consist of an uncontrollable contact.

Another important characteristic is the shape of the collar 52. Advantageously, in fact, the collar 52 is tapered radially inwards, with its annular end surfaces 52a, 52b which have a taper α of between 5° and 8°. Said taper values, when the spacer 50 is locked between the body 15 of the casing and machine frame, are able to ensure continuous contact surfaces both with the body and with the frame and also a seal between the collar 52 of the spacer 50 and the frame as well as between the collar 52 and the body 15.

As a result of this characteristic, with the annular end surfaces 52a, 52b of the collar having the same taper α, the spacer 50 may be arranged between the body and frame without having to be assembled necessarily in a particular direction.

Advantageously, the casing 10 is provided as a single structure formed by the body 15, the spacers 50 and the inserts 60 which fix the spacers to the body.

Alternatively, a kit comprising the body 15, the spacers 50 and the inserts 60 in the form of separate components, to be assembled at the production site or at the end user's location, could be provided. Should the end user already have some of these components, the kit may include only the missing components.

As a result of the present invention it is therefore possible to provide a stand-out casing which is raised with respect to the frame of the machine in which it is to be mounted, that is particularly suitable for the bakery and baked products industry.

This solution, moreover, is realized by providing a kit of components which is simple and easy to preassemble.

Moreover, the seal between the machine frame and the spacer is ensured owing to the elastomeric material of the collar and for the same reason the seal between spacer and casing body is also ensured.

Finally, with the present solution, the same component, i.e. the bushing of the body, may be reused as a bushing for the spacer.

In addition to the embodiment of the invention, as described above, it must be understood that there exist numerous other variants. It must also be understood that these embodiments are only examples and do not limit either the scope of the invention, nor its applications, nor its possible configurations. On the contrary, although the description above allows the person skilled in the art to implement the present invention at least according to one of its examples of embodiment, it must be understood that many variants of the components described are possible, without thereby departing from the scope of the invention, as defined in the accompanying claims, interpreted literally and/or in accordance with their legal equivalents.

## Claims

1. **Casing** (10) of a support assembly for food applications, made of composite material and comprising a body (15), in turn provided with:
- a housing portion (20) having a through-seat (25) within which a bearing unit is seated,
- a flange portion (30) for fixing the casing to a machine, having a base surface (35), at least two through-holes (32) for housing elements for fixing the casing (10) to the machine and a gasket (36) made of elastomeric material, on the base surface (35),
- at least two metal bushings (40), equal in number to the number of through-holes (32), housed stably inside respective through-holes (32) and coaxial with them,
the casing (10) being **characterized in that** it comprises:
- at least two spacers (50), equal in number to the number of through-holes (32), applied on the base surface (35) of the flange portion (30) opposite the respective through-holes (32), wherein each of the spacers (50) in turn comprises a bushing (51) made of metallic material and a collar (52) made of elastomeric material, bushing (51) and collar (52) being coaxial with each other and stably connected together,
- at least two inserts (60), equal in number to the number of spacers (50), and housed with interference inside the respective bushings (40) and inside the respective spacers (50).

2. Casing (10) according to Claim 1, wherein the bushings (51) of the spacers (50) and the bushings (40) of the body (15) are made of stainless steel and have the same geometry and same dimensions.

3. Casing (10) according to Claim 1 or 2, wherein annular end surfaces (52a, 52b) of the collar (52) have a taper (α) of between 5° and 8°.

4. Casing (10) according to any one of the preceding claims, wherein spacers (50) have the same internal diameter as the bushings (40) and are coaxial with them.

5. Casing (10) according to any one of the preceding claims, wherein the inserts (60) have:
- a first portion (61), proximal with respect to the through-seat (25) of the body (15) of the casing (10), mounted with interference inside the bushings (40), and
- a second portion (62), distal with respect to the through-seat (25), mounted with interference inside the bushings (51) of the spacers (50).

6. Casing (10) according to any one of the preceding claims, wherein the inserts (60) are blue in colour and made of a material detectable by a metal detector.

7. Casing (10) according to any one of the preceding claims, wherein the external diameter (Dd) of the spacer (50) is greater than the external diameter (Db) of the bushings (40).

8. Casing (10) according to any one of the preceding claims, wherein the external diameter (Dd) of the spacer (50) is smaller than the internal diameter (Dg) of the elastomeric gasket (36).

9. Casing (10) according to any one of the preceding claims, suitable for the bakery and baked products industry.

10. Kit comprising at least one of the following components, as defined according to any one of the preceding claims, of a support assembly for food applications:
a) a body (15) equipped with:
- a housing portion (20) having a through-seat (25) within which a bearing unit is seated,
- a flange portion (30) for fixing the casing to a machine, having a base surface (35), at least two through-holes (32) for housing elements for fixing the casing (10) to the machine and a gasket (36) made of elastomeric material, overmoulded along the base surface (35),
- at least two metal bushings (40) housed stably inside respective through-holes (32) and coaxial with them,
b) at least two spacers (50), applied on the base surface (35) of the flange portion (30) opposite the respective through-holes (32), wherein each of the spacers (50) in turn comprises a bushing (51) made of metallic material and a collar (52) made of elastomeric material, bushing (51) and collar (52) being coaxial with each other and stably connected together,
c) at least two inserts (60), each of them to be housed with interference inside the respective bushings (40) and inside the respective spacers (50).
